# EUROPÄISCHE PATENTSCHRIFT

(11) **EP 2 118 709 B1**
(45) Veröffentlichungstag und Bekanntmachung des Hinweises auf die Patenterteilung: **01.09.2010**
(21) Anmeldenummer: 07856052.1
(22) Anmeldetag: 05.12.2007
(51) Int. Cl.: G05B 19/18, G05B 19/39, G05B 19/404, B30B 1/18

(54) **VERFAHREN UND VORRICHTUNG ZUR STEUERUNG UND REGELUNG VON STÖSSELLAGEABWEICHUNGEN AN SERVO-ELEKTRISCHEN PRESSEN**
METHOD AND DEVICE FOR THE CONTROL AND REGULATION OF POSITION DEVIATIONS OF TAPPETS IN SERVOELECTRIC PRESSES
PROCÉDÉ ET DISPOSITIF DE COMMANDE ET DE RÉGLAGE DE DIFFÉRENCES DE POSITION DE PISTON DANS DES PRESSES SERVO-ÉLECTRIQUES

(30) Priorität: 15.12.2006 DE 102006059796
(43) Veröffentlichungstag der Anmeldung: 18.11.2009
(73) Patentinhaber: Müller Weingarten AG, 88250 Weingarten (DE)
(72) Erfinder: DARR, Uwe, 99094 Erfurt (DE); SCHMIDT, Steffen, 99198 Urbich (DE)
(74) Vertreter: Stern, Wolfgang
(86) Internationale Anmeldenummer: PCT/DE2007/002180
(87) Internationale Veröffentlichungsnummer: WO 2008/071154

(56) Entgegenhaltungen:
- EP-A- 0 652 100
- EP-A- 1 201 416
- DE-A1- 3 915 259
- DE-A1- 19 536 728
- DE-A1-102004 052 007

## Beschreibung

Die Erfindung betrifft ein Verfahren zur Steuerung und Regelung von Stößellageabweichungen an servo-elektrischen Pressen nach dem Oberbegriff des Patentanspruches 1 und eine Vorrichtung zur Durchführung des Verfahrens nach dem Oberbegriff des Patentanspruchs 11.

### Stand der Technik

Die DE 102 49 809 A1 beschreibt eine Presse mit mechanischer Kippungskompensation, die im Wesentlichen aus jeweils vier in den Ecken des Stößels und des Druckkastens einer Zieheinrichtung gegenüberliegend angeordneten Druckstangen besteht, wobei die bei außermittiger Ziehkraft auftretende Kippung von Stößel und Druckkasten durch die im Kontakt befindlichen Druckstangen kompensiert werden soll. Neben dem nicht unproblematischen Raumbedarf für die im Werkzeugraum angeordnete Kompensationsvorrichtung sind erhöhte Aufwendungen für die als Umrüstachsen mit jeweils motorisch steuerbaren Verstellspindeln ausgerüsteten Druckstangen erforderlich. Die beschriebene Vorrichtung ist für Pressen ohne Zieheinrichtung ungeeignet. Darüber hinaus kann mit der Vorrichtung eine Stößellageabweichung in Form von Schwankungen der Eintauchtiefe zwischen Ober- und Unterwerkzeug nicht beeinflusst werden.

Nach DE 10 2004 009 256 ist eine mechanische Mehr-Servopresse mit mehreren Druckpunkten bekannt, die jeweils von separaten Servomotoren entweder synchron für eine parallele Stößelbewegung oder mit unterschiedlichen Bewegungskurven für eine Schwenkbewegung des Stößels ansteuerbar sind. Eine Lösung zur Steuerung und Regelung von Lageabweichungen, wie beispielsweise die Kompensation von Schwankungen der Eintauchtiefe und der Kipplage des Stößels infolge außermittiger Belastung sowie deren Mittel für einen kurbelgetriebenen Stößelantrieb in der Betriebsart der Stößelbewegung mit Durchgang durch den unteren Umkehrpunkt sind nicht offenbart.

In der DE 197 53 949 wird eine flexible Umformpresse mit Parallelkinematikantrieb beschrieben, bei der mit vorzugsweise sechs zwischen Stößel und Gestell angeordneten Aktoren in Form von Hydraulikzylindern oder Spindeln eine nichtlineare Stößelbewegung steuerbar ist, an denen Längenmesseinrichtungen integriert sind, die die Messsignale der bei Belastung steifigkeitsbedingt verursachten Längenänderungen an die Pressensteuerung zur nachfolgenden steuerungstechnischen Kompensation rückführen. Die Druckschrift zielt auf eine Kombination von Taumelpressen und klassischen achsparallelen Pressen. Durch die dem Wirkprinzip mit linear steuerbaren Aktuatoren zugrundeliegende im Wesentlichen "kraftgebundene" Betriebsart mit Reversierbewegung im unteren Umkehrpunkt ist eine Übertragbarkeit auf die im Gegensatz von einem rotativ steuerbaren Kurbel- oder Hebelantrieb beim Durchgang durch den unteren Umkehrpunkt ohne Reversierbewegung erzielbare "weggebundene" Betriebsart nicht möglich.

Aus der DE 10 2004 052 007 A1 ist eine Umformpresse mit einem Antriebssystem für weg- oder kraftgebundene Bewegungsabläufe bekannt, bei dem in der Ausgestaltung mit separat steuerbaren Druckpunkten einerseits für eine Parallelhaltung des Stößels die infolge außermittigem Kraftangriff auftretende Kippung kompensierbar und andererseits eine Soll-Kippung erzielbar ist. Diese Kippungsregelung kann vorteilhaft im kraftgebundenen Bewegungsablauf mit Reversierbewegung des Stößelantriebes im Bereich des unteren Umkehrpunktes genutzt werden, wenn eine ausreichende Hubreserve zum Ausgleich der Differenz der elastischen Federung zwischen den benachbarten Druckpunkten vorhanden ist. In dieser Betriebsart sind jedoch die zusätzlichen Vorteile des alternativen weggebundenen Bewegungsablaufs mit Durchfahren des unteren Umkehrpunktes ohne Halt hinsichtlich einer hohen Taktrate bei gleichzeitig reduziertem Energieverbrauch nicht nutzbar.

In der JP 2003230996 A wird eine Steuerungsmethode für Mehrpunkt-Servopressen beschrieben, die durch ein Master-Slave-Regelungskonzept die Stößelkippung minimiert. Diese Methode hat den Nachteil, dass Positionsabweichungen beispielsweise infolge Federung der mechanischen Übertragungsglieder zwischen den Motoren und den Stößeldruckpunkten nicht ausgeregelt werden können.

Die DE 196 50 281 C1 beschreibt eine mechanische Presse mit einem mittels Verstellmechanismus längenveränderlichen Koppelglied in Form eines spiegelbildlich angeordneten Kniehebelpaars, das zwischen der Kurbel des Stößelantriebes und dem Stößel positioniert ist. Die Längenänderung des Koppelgliedes soll eine Zusatzbewegung des Stößels während der vom Kurbeltrieb eingeleiteten Stößel-Hauptbewegung bewirken, um eine Regelung der Eintauchtiefe zwischen Ober- und Unterwerkzeug zu ermöglichen. Der zugehörige Steuerungsaufbau und der Steuerungsablauf sind in der Druckschrift nicht beschrieben. Darüber hinaus ist eine Steuerung und Regelung der Kipplage des Stößels einer aus mehreren Druckpunkten bestehenden Presse mit einem zur Kippungsregelung erforderlichen Bewegungsablauf während des Umformvorgangs unter Last nicht offenbart.

In der DE 20 2004 016 837 U1 ist eine Presse mit einem Kniehebelantriebssystem offenbart, bei der die den benachbarten Druckpunkten des Stößels zugeordneten Kniehebel über den gemeinsamen Exzenterantrieb zueinander mechanisch zwangssynchronisiert sind. Die Druckschrift offenbart weiterhin eine Vorrichtung zur Eintauchtiefenregelung, um den unteren Umkehrpunkt des Stößels bei laufender Maschine zu justieren, wobei die mit dem Stößel gekoppelten Schubstangen mittels einer gewindebetätigten Verstelleinrichtung wirkverbunden sind. Eine aktive Kippungsregelung des Stößels ist aufgrund der mechanisch synchronisierten Druckpunkte nicht möglich. Darüber hinaus ist der zur Eintauchtiefenregelung zugehörige Steuerungsaufbau und der Steuerungsablauf in der Druckschrift nicht beschrieben.

Die DE 41 32 607 B4 offenbart ein Werkzeuglageregelsystem zur Lagekorrektur des Stößels infolge elastischer Verformungen, um beim Übergang von Einarbeitungs- auf Produktionspressen eine reproduzierbare Formteilqualität zu erzielen. Dabei sollen insbesondere die Eigenschaften von mehrstufigen Großteilstufenpressen mit mehreren Werkzeugstufen je Stößel auf einstufigen Einarbeitungspressen nachgebildet werden. Das Werkzeuglageregelsystem ist durch eine mit dem Stößel schwimmend gekoppelte Stößelplatte gekennzeichnet, mit der elastische Lageabweichungen zwischen Ober- und Unterwerkzeug mittels Regelachsen in mehreren Freiheitsgraden beeinflussbar sind.

Aus der DE 196 42 587 ist eine Stößelparallelhaltung an Mehrpunktpressen bekannt, bei der die infolge außermittiger Belastung auftretende unterschiedliche Längsverformung der Pressenteile durch eine Verminderung der Steife des betreffenden hydraulischen Druckkissens im Stößel kompensiert wird. Neben dem nicht unerheblichen zusätzlichen Aufwand für die servohydraulische Regelung der Druckkissen wird die Regelgenauigkeit unter anderem von der physikalisch bedingten Ölkompressibilität beeinflusst. Darüber hinaus ist mit dieser Vorrichtung eine Regelung der durch Störgrößen schwankenden Eintauchtiefe des Stößels nicht möglich.

Die DE 20 2004 005 014 offenbart eine Anordnung von Messeinrichtungen in einer Presse, um die durch Störgrößen schwankende Stößelumkehrposition zu erfassen, deren Signale eine in den Druckpunkten angeordnete Verstelleinrichtung so steuern, dass der untere Umkehrpunkt des Stößels unabhängig von Störgrößen möglichst konstant bleibt. Eine Steuerung und Regelung der infolge während des Pressvorgangs von Umformbeginn bis zum unteren Umkehrpunkt durch außermittigen Kraftangriff entstehenden Kipplage des Stößels ist nicht vorgesehen.

Nach der DE 195 36 728 A1 ist eine Antriebssteuereinrichtung für eine mittels Servomotor antreibbare Stanzmaschine bekannt, bei der mit einem begrenzt verfügbarem Gesamtantriebsmoment zur Erhöhung der Schlagrate die minimal erforderliche Hubhöhe so einstellbar ist, dass entweder bei einem hohem Stanzmomentbedarf die Beschleunigung des Stößels aus der oberen Umkehrposition bereits vor dem Stanzvorgang abgeschlossen ist oder bei niedrigem Stanzmomentbedarf während des Stanzvorgangs noch ein anteiliges Beschleunigungsmoment nutzbar ist. Die zugehörige Stößelsteuereinrichtung zum Antrieb des Servomotors enthält eine Positioniersteuereinrichtung und eine Geschwindigkeitssteuereinrichtung, mit dessen Ausgangssignal der Servomotor über einen Verstärker ansteuerbar ist, wobei innerhalb des Lage-Regelkreises einerseits mittels eines Positionsdetektors die Ist-Lage erfasst und in die Positioniersteuereinrichtung rückführbar ist und andererseits die Ist-Geschwindigkeit mittels eines Geschwindigkeitsdetektors in die Geschwindigkeitssteuereinrichtung rückgeführt wird.

Von der Steuereinrichtung sind neben der einstellbaren Blechhöhe die speicherbare Geschwindigkeitskurve und das Beschleunigungsdrehmoment sowie das Stanzdrehmoment, das durch Rückführung des aus den elektrischen Stromwerten eines Drehmomentendetektors ermittelten Drehmoment-Istwertes berechnet wird, abrufbar.

Eine Steuerung und Regelung von Lageabweichungen, wie Eintauchtiefe und Kipplage des Stößels ist nicht vorgesehen.

### Aufgabe und Vorteil der Erfindung

Der Erfindung liegt die Aufgabe zugrunde, mit geringem Aufwand ein Verfahren und eine Vorrichtung zur Steuerung und Regelung des Antriebssystems einer Presse zu schaffen, bei der die Reproduzierbarkeit der Qualität der herzustellenden Formteile trotz Wirkung von störenden Einflussgrößen verbessert, die Standzeit der Werkzeuge erhöht und die Produktivität bei gleichzeitig reduziertem Energieverbrauch gesteigert wird. Erfindungsgemäß wird die Aufgabe durch ein Verfahren zur Steuerung und Regelung von Stößellageabweichungen an servo-elektrischen Pressen mit den Merkmalen des Anspruches 1 gelöst. Weitere detaillierte Ausgestaltungen des Verfahrens sind in den Ansprüchen 2 bis 10 beschrieben. Die Durchführung des Verfahrens nach dem Anspruch 1 erfolgt mit einer Vorrichtung mit den Merkmalen gemäß Anspruch 11.

Der Kerngedanke der Erfindung besteht darin, dass in einer servo-elektrischen Umformpresse die infolge von äußeren und inneren Einflussgrößen verursachten Lageabweichungen eines mittels einer Kurbel oder eines Hebels antreibbaren Stößels in der "weggebundenen" Betriebsart beim Durchgang durch den unteren Umkehrpunkt so beeinflussbar sind, dass einerseits die Eintauchtiefe und andererseits die Kipplage des Stößels steuer- oder regelbar ist.

Wesentliche Einflussgrößen auf die Eintauchtiefe sind die Wärmedehnung sowie die unter Wirkung der Massenkräfte verursachte elastische Federung der Maschinenteile und des Werkzeuges, wodurch der Hub und die Hublage des Stößels beeinflusst werden. Um den Einfluss dieser Störgrößen einerseits auf eine reproduzierbare Formteilqualität und andererseits auf eine konstante Stößelposition im unteren Umkehrpunkt, die beispielsweise beim Schneiden zur Schonung der Werkzeuge erforderlich ist, zu kompensieren, ist eine Eintauchtiefenregelung während des laufenden Betriebes der Presse unumgänglich. Die Kipplage des Stößels wird im Wesentlichen durch die Außermittigkeit der resultierenden Presskraft beeinflusst, wodurch eine asymmetrische Auffederung der Presse erfolgt. Dabei kann die Größe und Lage des resultierenden außermittigen Kraftangriffs während des Pressvorgangs von Umformbeginn bis zum Erreichen der Endlage schwanken. Bei Pressen mit mehreren Werkzeugstufen unter einem gemeinsamen Stößel kommt hinzu, dass sich aus der Summe der Einzelkräfte je Werkzeugstufe eine resultierende Gesamtkraft ergibt und diese zusätzlich in Abhängigkeit der Belegung der Werkzeugstufen, insbesondere beim Voll- und Leerfahren der Presse in ihrer Wirkung auf den Stößel schwankt. Die Steuerung und Regelung soll dabei die Kipplage des Stößels so beeinflussen, dass einerseits Abweichungen der Kipplage für eine Parallelität zwischen Ober- und Unterwerkzeug kompensierbar sind oder andererseits eine definierte Schiefstellung erzeugbar ist. Stößellageabweichungen werden ferner durch die Schwankung prozessspezifischer Einflussgrößen, wie beispielsweise der Blechdickentoleranz, der Blechfestigkeitstoleranz und der. Blechschmierungstoleranz hervorgerufen.

Es ist erfindungswesentlich, dass für die Steuerung und Regelung dieser Stößellageabweichungen zur Vermeidung zusätzlicher Aufwendungen die bereits in servo-elektrischen Pressen vorhandenen Antriebskomponenten, wie der Hauptantrieb für die Stößelbewegung und der Nebenantrieb für die Stößel-Lageverstellung vorteilhaft genutzt werden. Dabei sind die den Druckpunkten einer Mehrpunktpresse separat zugeordneten Antriebe sowohl für die mit einer Kurbel erzeugbare Hauptbewegung als auch für die Stößel-Lageverstellung als Nebenbewegung mittels jeweils unabhängig voneinander steuerbaren Servomotoren ausgerüstet. Dadurch ist es möglich, dass die zwischen den benachbarten Druckpunkten einerseits differenziert veränderbare Stößel-Lageverstellung und der andererseits differenziert veränderbare Bewegungsablauf des Stößelhubes in kombinatorischer Wirkung eine aktive Eintauchtiefen- und Kippungsregelung bewirkt. Je nach geforderter Genauigkeit können Verfahrensvarianten zur Steuerung und Regelung der Stößellage eingesetzt werden, die entweder mit direkter Positionsmessung am Stößel bzw. Werkzeug arbeiten oder die die Stößel-Lageabweichung indirekt aus anderen Prozessgrößen ermitteln.

In einer ersten Ausführung kann die Kippung des Stößels statisch so gesteuert werden, dass die infolge außermittiger Belastung zu erwartende Kipplage mittels der jedem Druckpunkt separat zugeordneten servogetriebenen Lageverstellung durch Voreinstellung kompensiert wird, wobei die asymmetrischen Federungswege anhand der teilespezifischen außermittigen Belastung unter Berücksichtigung des maschinenspezifischen Steifigkeitsmodells bestimmbar sind. Dabei kann die teilespezifische außermittige Belastung entweder durch Bedienereingabe anhand eines rechnerisch vorbestimmten Modells oder mittels Messung der Kräfte bzw. der Federung während eines praktischen Lernhubes ermittelt werden. Es ist sowohl möglich, lediglich den im Pressenzyklus zu erwartenden Maximalwert der außermittigen Belastung und deren Position zu erfassen, als auch die mögliche veränderliche Größe und Lage der Kraftresultierenden während des Umformweges zu berücksichtigen. Während des Pressenzyklus erfolgt die eigentliche Kompensation der Stößelkippung durch eine Kombination der voreingestellten asymmetrischen Stößel-Lageverstellung und dem asymmetrischen Bewegungsablauf der den Druckpunkten separat zugeordneten Servomotoren für den Hauptantrieb.

Der Pressenzyklus kann sowohl im Pendel-Modus < 360° mit reduziertem Stößelhub als auch im 360°- Umlauf-Modus erfolgen, wobei in der letzteren Betriebsart bei dieser Ausführung mit statisch voreingestellter Lageverstellung im oberen Umkehrpunkt außerhalb des Werkzeugeingriffs eine Stößelschiefstellung zu erwarten ist. Diese Schiefstellung im oberen Umkehrpunkt während des 360°- Umlauf-Modus kann in einer zweiten Ausführung mit dynamischer Steuerung der Kippung dadurch vermieden werden, dass der Bereich des oberen Umkehrpunktes jeweils im Zyklus mit symmetrischer Lageverstellung durchfahren wird und die asymmetrische Lageverstellung nach dem oberen Umkehrpunkt vor der folgenden Lastphase erneut aktiviert wird.

Diese zweite Ausführung ist besonders geeignet, eine dynamische Kippungssteuerung in Abhängigkeit der Belegung der Werkzeuge mit Formteilen zu ermöglichen. Dabei kann für den Betriebsfall ohne Formteil im Werkzeug die Asymmetrie der Lageverstellung und des Bewegungsablaufes während des Zyklus deaktiviert werden. Für den Betriebsfall Voll- und Leerfahren eines aus mehreren Stufen bestehenden Werkzeugsatzes kann bei der zweiten Ausführung mit dynamischer Kippungssteuerung für jede Belegungssituation vorteilhaft eine separate Asymmetrie der Lageverstellung und des Bewegungsablaufes aktiviert werden, wodurch eine reproduzierbare Formteilqualität auch während der Voll- und Leerfahrphase gewährleistet wird.

Für gesteigerte Anforderungen kann in einer dritten Ausführung eine dynamische Regelung der Kippung und bedarfsweise der Eintauchtiefe derart erfolgen, dass während der Lastphase im Bereich vor dem unteren Umkehrpunkt die Lage des Stößels oder Oberwerkzeuges bezüglich Kippung und Abweichung des unteren Umkehrpunktes mittels einer Stößel-Positionsmesseinrichtung erfasst wird und innerhalb eines Regelkreises die Kipplage und bedarfsweise die Eintauchtiefe dynamisch beeinflusst wird.

Dabei können die in der Lastphase ermittelten Messgrößensignale der Stößel-Positionsmesseinrichtungen vorzugsweise beim Durchlauf oder Anfahren des oberen Umkehrpunktes in Vorbereitung der Lastphase des folgenden Pressenzyklus zur Korrektur der Stößel-Lageverstellung genutzt werden. Dabei können Abweichungen des unteren Umkehrpunktes, beispielsweise infolge der veränderlichen Einflussgrößen Temperatur und Hubzahl zu einer zwischen den Druckpunkten in der Regel symmetrischen ersten Korrekturgröße der Stößellage führen. Diese erste Korrekturgröße ist mit der zwischen den Druckpunkten asymmetrischen zweiten Korrekturgröße infolge der gemessenen Kipplage des Stößels bei außermittiger Belastung überlagerbar.

In einer vierten Ausführung kann die Eintauchtiefe des Stößels gesteuert werden. Dabei sind die zu erwartenden Abweichungen der unteren Umkehrlage des Stößels oder Werkzeuges in Abhängigkeit von Einflussgrößen, wie beispielsweise einschaltdauerbedingte Temperaturänderungen und Hubzahlen unter Berücksichtigung eines maschinenspezifischen Modells in der Steuerung gespeichert. Durch die während des Betriebes messbaren Einflussgrößen, wie beispielsweise Einschaltdauer, Temperatur, Hubzahl wird eine Berechnung der vorzugsweise im Bereich des oberen Umkehrpunktes anzufahrenden Korrekturwerte der Stößel-Lageverstellung ermöglicht.

Allen Ausführungen ist gemeinsam, dass zur Steuerung der Servomotoren für den Hauptantrieb zweckmäßigerweise eine Kurvenscheibenregelung eingesetzt wird, die separate elektronische Kurvenscheiben für den jedem Druckpunkt zugeordneten Antrieb verwendet. Die Kurvenscheiben können bei Bedarf ebenso wie die Stößel-Lageverstellung in Vorbereitung auf den nächsten Pressenzyklus verändert werden. Anstelle der separaten Kurvenscheiben für jeden Antrieb ist auch eine Steuerung mit einer gemeinsamen Kurvenscheibe für den Bewegungsablauf ohne Korrektur und zusätzlichen Korrektur-Kurvenscheiben für jeden Antrieb möglich. Nur die letzteren werden dann entsprechend der Stößel-Lageverstellung verändert.

Das Verfahren und die Vorrichtung sind bezüglich der Steuerung und Regelung der Eintauchtiefe des Stößels sowohl bei Einpunkt- als auch bei Mehrpunkt-Pressen und bezüglich der Steuerung und Regelung der Kipplage bei Mehrpunkt-Pressen jeweils mit Kurbelantrieb, Hebelantrieb, linear oder rotativ steuerbarem Kniehebelantrieb in Ausführung als Ober- oder Unterantrieb mit Nutzung der "weggebundenen" Betriebsart einsetzbar. Bei dem für die "weggebundene" Betriebsart typischen "Durchfahren" des unteren Umkehrpunktes kann gegenüber der "kraftgebundenen" Betriebsart mit Reversierung im Bereich des unteren Umkehrpunktes einerseits durch Wegfall zeitbehafteter Umsteuervorgänge eine erhöhte Produktivität und andererseits durch Nutzung der Schwungmassen des Antriebes eine Reduzierung des Energieverbrauchs erreicht werden.

Allen Ausführungen ist gemeinsam, dass die den Druckpunkten des Stößels jeweils separat zugeordneten Servomotoren für den Haupantrieb und die Lageverstellung zur Einflussnahme auf prozessbedingte Lageabweichungen des Stößels oder Werkzeuges in kombinatorischer Wechselwirkung steuerbar sind.

### Ausführungsbeispiele

Die Erfindung wird nachstehend an Ausführungsbeispielen näher erläutert. Die zugehörige Zeichnung zeigt:
- Fig. 1: Prinzipieller Aufbau einer servo-elektrischen Presse mit Kurbeltrieb zur Steuerung und Regelung von Stößellageabweichungen
- Fig. 2: Blockschaltbild der steuerungstechnischen Vorrichtungsmerkmale
- Fig. 3: Schrittfolge des Verfahrens zur Beeinflussung der Kipplage des Stößels nach einer ersten Ausführung "gesteuert, statisch"
- Fig. 4: Schrittfolge des Verfahrens zur Beeinflussung der Kipplage des Stößels nach einer zweiten Ausführung "gesteuert, dynamisch"
- Fig. 5: Schrittfolge des Verfahrens zur Beeinflussung der Kipplage und Eintauchtiefe des Stößels nach einer dritten Ausführung "geregelt, dynamisch"
- Fig. 6: Schrittfolge des Verfahrens zur Beeinflussung der Eintauchtiefe des Stößels nach einer vierten Ausführung "gesteuert"
- Fig. 7: Grafik einer Ablauffolge für die Kippungsregelung im Pressenzyklus

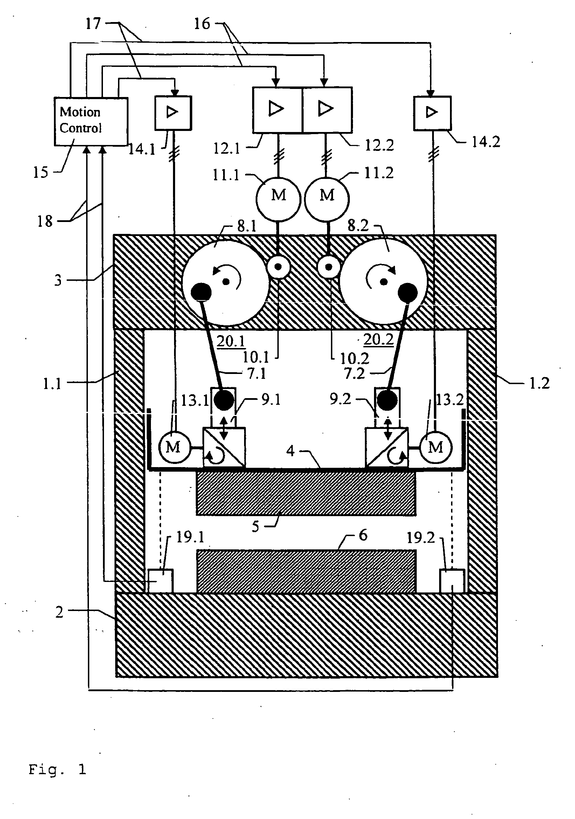

Fig. 1 zeigt den schematischen Aufbau einer servo-elektrischen Presse zur Steuerung und Regelung von Stößellageabweichungen mit Servoantrieben für die Stößelbewegung und die Stößel-Lageverstellung. Das Unterwerkzeug 6 ist auf dem Tisch 2 angeordnet. Die Hubbewegung des in den Seitenständer 1.1, 1.2 längsgeführten Stößels 4 mit zugehörigem Oberwerkzeug 5 erfolgt mittels Kurbeltrieb auf die beiden Druckpunkte 20.1, 20.2. Das zugehörige Pleuel 7.1, 7.2 ist jeweils einerseits mit dem im Kopfstück gelagerten Exzenterrad 8.1, 8.2 und andererseits mit der im Stößel 4 angeordneten Verstelleinrichtung 9.1, 9.2 wirkverbunden. Die Exzenterräder 8.1, 8.2 sind jeweils über ein Vorgelege mit einem erstem und zweiten Ritzel 10.1, 10.2 separat von einem ersten und zweiten Servomotor 11.1, 11.2 und zugehörigem Umrichter 12.1, 12.2 steuerbar. Die Verstelleinrichtungen 9.1, 9.2 dienen der Einstellung und Korrektur der Stößellage und werden jeweils von dem separat zugeordneten dritten und vierten Servomotor 13.1, 13.2 mit zugehörigem Umrichter 14.1, 14.2 gesteuert. Die NC-Steuereinrichtung 15 erzeugt die Führungsgrößensignale 16 für die Servomotoren 11.1, 11.2 zum Hauptantrieb und die Führungsgrößensignale 17 für die Servomotoren 13.1, 13.2 zur Stößel-Lageverstellung. Die Lage des Stößels 4 wird mittels der auf dem Tisch 2 angeordneten ersten und zweiten Stößel-Positionsmesseinrichtung 19.1. 19.2 erfasst, deren Messgrößensignale in der NC-Steuereinrichtung 15 verarbeitet werden.

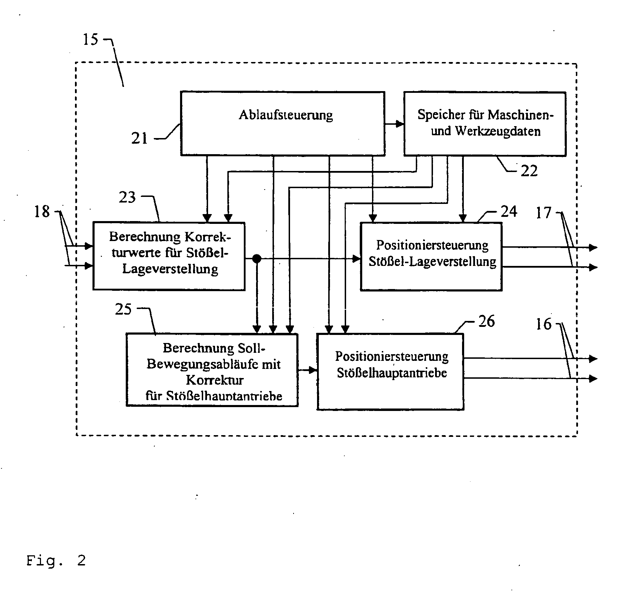

In Fig.2 sind die steuerungstechnischen Vorrichtungsmerkmale der NC-Steuereinrichtung 15 als Blockschaltbild dargestellt. Diese enthält die Funktionseinheit zur Positioniersteuerung des Hauptantriebes 26, die einerseits mit der Ablaufsteuerung 21 und andererseits mit der Funktionseinheit zur Berechnung der Soll-Bewegungsabläufe mit Korrektur für den Hauptantrieb 25 verknüpft ist. Die weitere Funktionseinheit zur Positioniersteuerung der Stößel-Lageverstellung 24 ist einerseits mit der Ablaufsteuerung 21 und andererseits mit der Funktionseinheit zur Berechnung der Korrekturwerte für die Lageverstellung 23 verknüpft. Von den Funktionseinheiten 23, 24, 25, 26 sind spezifische Daten aus dem der Ablaufsteuerung 21 zugeordneten Speicher für Maschinen- und Werkzeugdaten 22 abrufbar. Die Funktionseinheiten 23 und 25 werden ebenso von der Ablaufsteuerung 21 koordiniert und sind zusätzlich untereinander signaltechnisch verknüpft. Die von der ersten und zweiten Stößel-Positionsmesseinrichtung 19.1, 19.2 erzeugten Messgrößensignale 18 gelangen in die Funktionseinheit zur Berechnung der Korrekturwerte für die Lageverstellung 23. Die Funktionseinheiten 24 und 26 liefern jeweils die Führungsgrößensignale 17 und 16 für die Umrichter 14.1, 14.2 und 12.1, 12.2 zur Ansteuerung der Servomotoren 13.1, 13.2 und 11.1, 11.2.

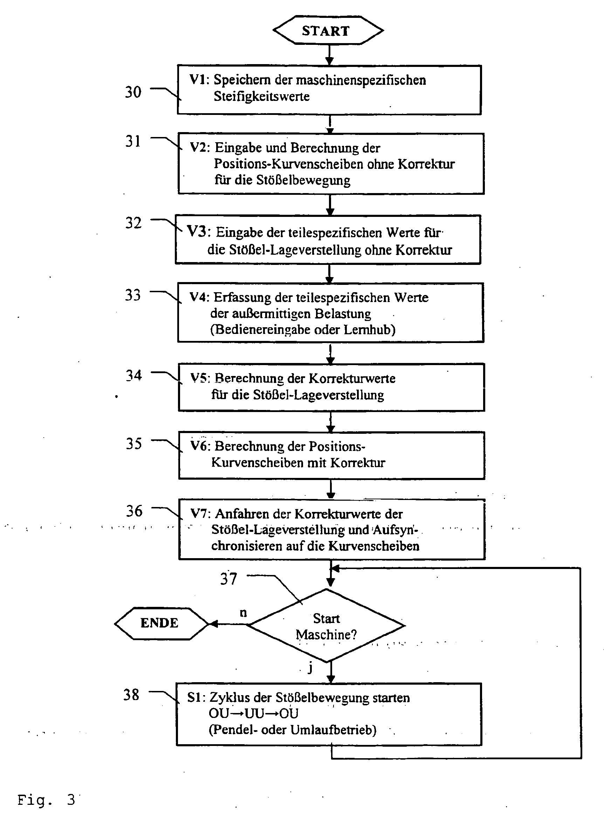

In Fig.3 ist die Schrittfolge des Verfahrens zur Beeinflussung der Kipplage des Stößels nach einer ersten Ausführung vom Typ "gesteuert, statisch" dargestellt. In der ersten Vorbereitungsphase 30 werden die maschinenspezifischen Steifigkeitswerte in der Funktionseinheit 22 gespeichert. In der zweiten Vorbereitungsphase 31 erfolgt die Eingabe und Berechnung der Positions-Kurvenscheibe "ohne Korrektur" für den Hauptantrieb zur Stößelbewegung. Die Eingabe der teilespezifischen Werte für die Stößel-Lageverstellung "ohne Korrektur" erfolgt in der dritten Vorbereitungsphase 32. In der vierten Vorbereitungsphase 33 werden die teilespezifischen Werte der infolge außermittiger Belastung während der Umformphase zu erwartenden Kipplage des Stößels 4 erfasst. Die Eingabe kann beispielsweise durch den Bediener erfolgen, wobei die asymmetrischen Federungswege der benachbarten Druckpunkte 20.1, 20.2 unter Berücksichtigung des in der ersten Vorbereitungsphase 30 gespeicherten maschinenspezifischen Steifigkeitsmodells bestimmbar sind. Alternativ sind die asymmetrischen Federungswege mittels Messung der Kräfte bzw. der Federung während eines praktischen Lernhubes bestimmbar.

Anschließend werden in der fünften Vorbereitungsphase 34 die Korrekturwerte der jedem Druckpunkt separat zugeordneten servogetriebenen Lageverstellung berechnete um die asymmetrischen Federungswege im Sinne einer gegensinnigen Voreinstellung zu kompensieren.

In der sechsten Vorbereitungsphase 35 wird die Positions-Kurvenscheibe "mit Korrektur" für die Stößelbewegung berechnet, die einen asymmetrischen Bewegungsablauf der den benachbarten Druckpunkten separat zugeordneten Servomotoren für den Hauptantrieb bewirkt.

In der siebenten Vorbereitungsphase 36 werden mittels der Steuerung die zuvor ermittelten Korrekturwerte der Stößel-Lageverstellung angefahren und die Lageregelung auf die Positions-Kurvenscheiben aktiviert. Nach dem Startsignal 37 beginnt mit dem ersten Verfahrensschritt 38 der zyklische Ablauf, wobei die Kompensation der Stößelkippung durch eine Kombination der voreingestellten asymmetrischen Stößel-Lageverstellung und dem asymmetrischen Bewegungsablauf der den Druckpunkten separat zugeordneten Servomotoren für den Hauptantrieb erfolgt.

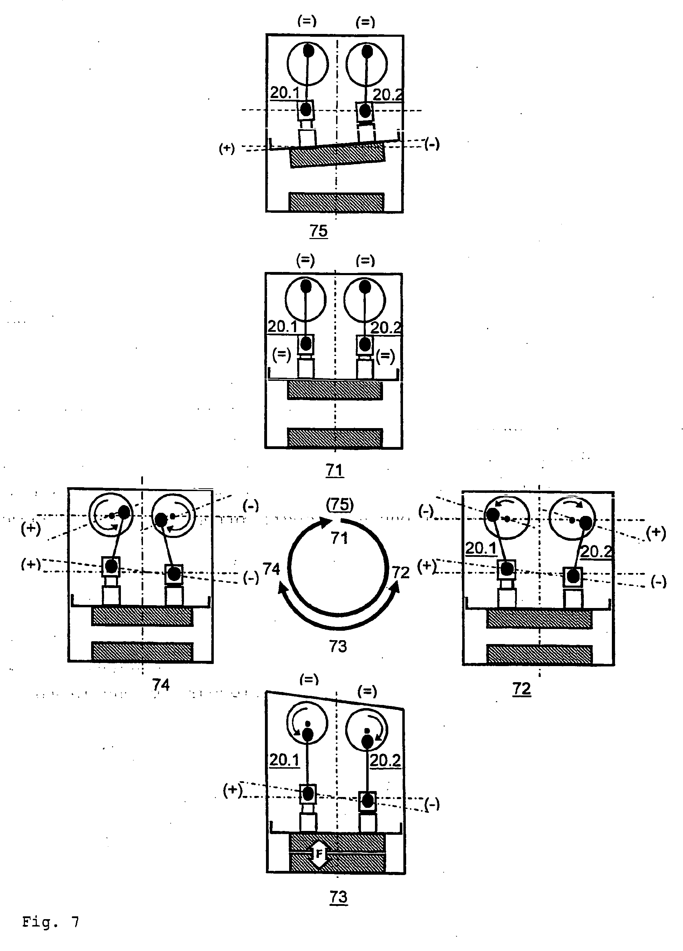

Die Beschreibung der Ablauffolge für die Kippungsregelung im Pressenzyklus wird durch die Grafik in Fig.7 unterstützt. Gemäß der Darstellung in Phase 73 tritt im unteren Umkehrpunkt des Kurbeltriebes eine teilespezifische außermittige Belastung auf, deren resultierende Kraft "F" asymmetrisch nach links versetzt ist. Der Pressenzyklus kann sowohl im Pendel-Modus < 360° mit reduziertem Stößelhub als auch im 360°- Umlauf-Modus mit maximalem Stößelhub erfolgen.

In der Phase 72 nach dem oberen Umkehrpunkt für 360°-Umlauf-Modus oder des oberen Umkehrpunktes für Pendel-Modus ist der rechte Druckpunkt 20.2 in negativer (-) Richtung und der linke Druckpunkt 20.1 in positiver (+) Richtung um das zuvor ermittelte Maß der zu erwartenden Stößelkippung verstellt. Eine außerhalb der Lastphase im unbelasteten Zustand infolge asymmetrischer Stößel-Lageverstellung eintretbare Stößelschiefstellung wird durch die Kombination mit dem asymmetrischen Bewegungsablauf des Kurbeltriebes der benachbarten Druckpunkte 20.1, 20.2 dadurch kompensiert, dass der zum rechten Druckpunkt 20.2 zugehörige Kurbeltrieb um das entsprechende Maß in positiver (+) Richtung voreilt und der zum linken Druckpunkt 20.1 zugehörige Kurbeltrieb um das entsprechende Maß in negativer (-) Richtung nacheilt, sodass der Stößel 4 außerhalb der Lastphase keine Schiefstellung aufweist. Die in der Umformphase eintretende in Richtung des unteren Umkehrpunktes wachsende teilespezifische außermittige Belastung führt zu einer asymmetrischen Auffederung der Presse, in deren Folge eine Stößelkippung entstehen würde. Um diese Kippung zu minimieren oder zu kompensieren, wird während der Annäherung an den unteren Umkehrpunkt die Phasenverschiebung in der Bewegung des dem rechten und linken Druckpunkt 20.1, 20.2 zugeordneten Kurbeltriebes aufgehoben.

In der Phase 73, in der im unteren Umkehrpunkt die außermittige Belastung (Kraft "F") während der Umformphase ihr Maximum erreicht, befinden sich das erste und zweite Pleuel 7.1, 7.2 der benachbarten Kurbeltriebe synchron zueinander in Strecklage. In dieser Position wird die eintretende Schiefstellung des Stößels 4 durch die zuvor im gleichen Betrag asymmetrische Stößel-Lageverstellung kompensiert.

Es ist ebenso denkbar, die Voreinstellung der Stößel-Lageverstellung so zu wählen, dass eine gezielte Stößelkippung erreicht wird, beispielsweise auch zur Erreichung einer definierten Parallelität zwischen Ober- und Unterwerkzeug 5, 6 unter Berücksichtigung einer asymmetrischen Federung des Tisches 2 im Fall außermittig wirkender Kräfte während des Umformvorgangs. Nach Durchfahren des unteren Umkehrpunktes des Stößels 4 ist das Pressteil fertiggeformt und die elastische Auffederung der Presse geht zurück. Da die asymmetrische Stößel-Lageverstellung weiterhin wirkt, würde sich mit zunehmender Entlastung der Presse der Stößel 4 schief stellen. Diese Situation wird dadurch vermieden, indem nach dem Durchfahren des unteren Umkehrpunktes die Phasenverschiebung in der Bewegung des dem rechten und linken Druckpunkt 20.1, 20.2 zugeordneten Kurbeltriebes so zunimmt, dass entsprechend Phase 74 der zum rechten Druckpunkt 20.2 zugehörige Kurbeltrieb um das entsprechende Maß in negativer (-) Richtung nacheilt und der zum linken Druckpunkt 20.1 zugehörige Kurbeltrieb um das entsprechende Maß in positiver (+) Richtung voreilt, sodass der Stößel 4 außerhalb der Lastphase keine Schiefstellung aufweist.

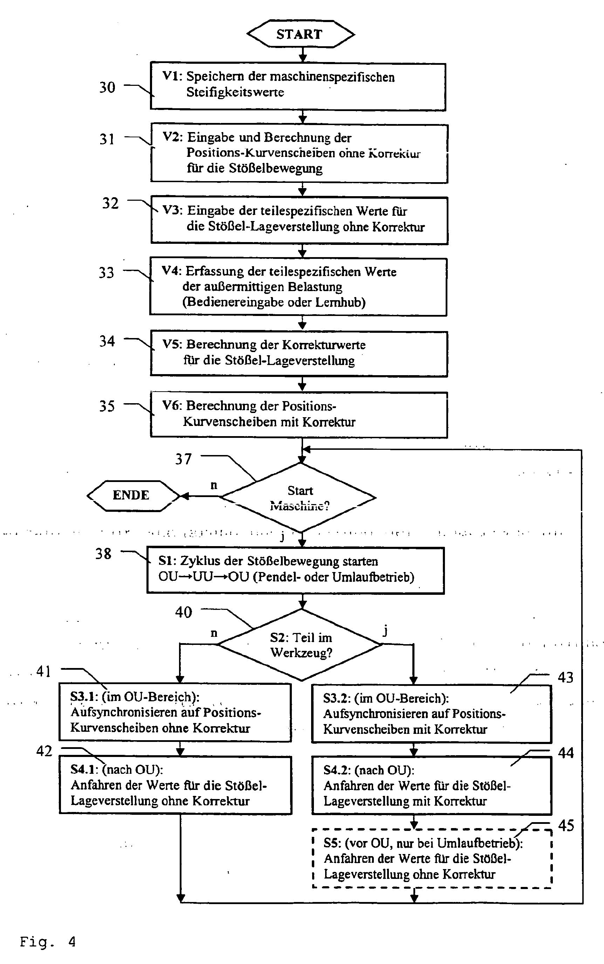

Wie eingangs beschrieben, kann der Pressenzyklus sowohl im Pendel-Modus < 360° mit reduziertem Stößelhub als auch im 360°- Umlauf-Modus erfolgen. In der letzteren Betriebsart ist nach dieser ersten Ausführung vom Typ "gesteuert, statisch" im oberen Umkehrpunkt außerhalb des Werkzeugeingriffs eine Stößelschiefstellung zu erwarten. Um diesen Fall zu vermeiden, kann die zweite Ausführung vom Typ "gesteuert, dynamisch" Anwendung finden, deren Schrittfolge des Verfahrens zur Beeinflussung der Kipplage des Stößels im nachfolgenden Ausführungsbeispiel anhand Fig. 4 beschrieben wird.

Die Vorbereitungsphasen 30 bis 35 sind identisch mit dem ersten Ausführungsbeispiel nach Fig.3.

Nach dem Startsignal 37 beginnt mit dem ersten Verfahrensschritt 38 der zyklische Ablauf, wobei die Kompensation der Stößelkippung durch eine Kombination der dynamischen asymmetrischen Stößel-Lageverstellung und dem asymmetrischen Bewegungsablauf der den Druckpunkten separat zugeordneten Servomotoren für den Hauptantrieb erfolgt. Im Gegensatz zur ersten Ausführung vom Typ "gesteuert, statisch" werden die Verstelleinrichtungen 9.1, 9.2 zur Stößel-Lageverstellung während des Zyklus dynamisch aktiviert. Die Aktivierung hängt von der Anwesenheit eines Formteiles im Werkzeug ab. Im Fall des notwendigen Durchtakten einer so genannten Leerstufe, beispielsweise für mehrstufige Umformung eines Formteils mit mehreren in einer Reihe angeordneten Pressen, kann die dynamische Stößel-Lageverstellung in Kombination mit dem möglichen asymmetrischen Bewegungsablauf der beiden Kurbeltriebe des Hauptantriebes deaktiviert werden. Daher erfolgt im zweiten Verfahrensschritt 40 eine Abfrage der Teilebelegung im Werkzeug. Wenn kein Teil im Werkzeug vorhanden ist, wird im dritten Verfahrensschritt 41 für Stößelhub ohne Teil im Bereich des oberen Umkehrpunktes die Lageregelung auf die Positions-Kurvenscheiben ohne "Korrektur" aktiviert. Entsprechend dem vierten Verfahrenschritt 42 für Stößelhub ohne Teil werden von der Stößel-Lageverstellung im Bereich nach dem oberen Umkehrpunkt die Werte "ohne Korrektur" angefahren. Der Zyklus wird mit diesen Einstellungen beendet und im Folgezyklus die Anwesenheit eines Formteiles mit Verfahrensschritt 40 erneut abgefragt.

Im Fall eines vorhandenen Formteils schließt sich der dritte Verfahrensschritt 43 für Stößelhub mit Teil an, wobei im oberen Umkehrbereich die Lageregelung auf Positions-Kurvenscheiben "mit Korrektur" aktiviert wird. Entsprechend dem vierten Verfahrenschritt 44 für Stößelhub mit Teil werden von der Stößel-Lageverstellung im Bereich nach dem oberen Umkehrpunkt die Werte "mit Korrektur" angefahren. Der funktionale Ablauf im Zyklus erfolgt dann im Wesentlichen analog der ersten Ausführung. In der Betriebsart mit 360°-Umlauf werden entsprechend dem fünften Verfahrensschritt 45 für Stößelhub mit Teil vor dem oberen Umkehrpunkt von der Verstelleinrichtung 9.1, 9.2 die Werte für die Stößel-Lageverstellung "ohne Korrektur" angefahren, sodass eine Stößelkippung außerhalb der Lastphase vermieden wird. Der nachfolgende Zyklus wird mit der wiederholten Abfrage der Anwesenheit eines Formteiles gestartet. Diese Ausführung vom Typ "gesteuert, dynamisch" kann ebenfalls bei Pressen mit mehreren Werkzeugstufen unter einem gemeinsamen Stößel Anwendung finden, wenn die resultierende Gesamtkraft in der Wirkung auf den Stößel außermittig ist und insbesondere beim Voll- und Leerfahren der Presse im Betrag und der Lage schwankt. In dieser Betriebsart können bei jedem Folgehub bis zur vollgefahrenen Presse die Einstellwerte der Stößel-Lageverstellung "mit Korrektur" in Kombination mit dem asymmetrischen Bewegungsablauf der Kurbeltriebe der benachbarten Druckpunkte variieren.

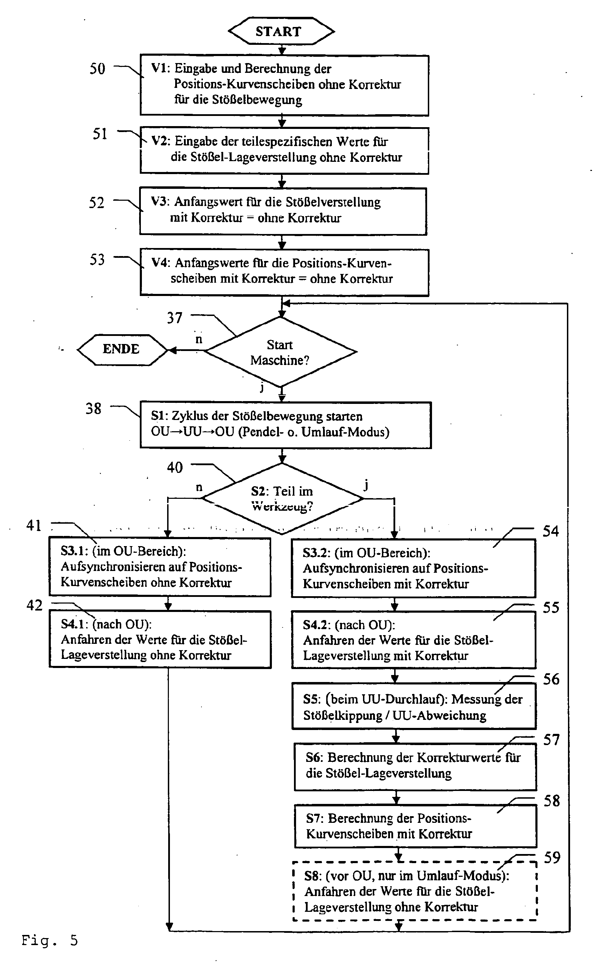

Aus Fig.5 ist die Schrittfolge des Verfahrens zur Beeinflussung der Kipplage und Eintauchtiefe des Stößels nach einer dritten Ausführung mit Typ "geregelt, dynamisch" ersichtlich. Gegenüber den zuvor beschriebenen Ausführungen kann neben der Beeinflussung der Kipplage des Stößels bedarfsweise in Kombination eine Beeinflussung der Eintauchtiefe des Stößels jeweils dynamisch erfolgen. Eine Beeinflussung der Eintauchtiefe kann insbesondere zur Kompensation von Lageabweichungen des unteren Umkehrpunktes infolge der veränderlichen Einflussgrößen Temperatur und Hubzahl führen. Die Korrekturgrößen zur Beeinflussung der Kipplage und Eintauchtiefe sind überlagerbar, wobei die Stößellage mittels der Stößel-Positionsmesseinrichtungen 19.1, 19.2 erfasst und innerhalb eines Regelkreises dynamisch beeinflusst wird. In der ersten Vorbereitungsphase 50 erfolgt die Eingabe und Berechnung der Positions-Kurvenscheiben "ohne Korrektur" für den Hauptantrieb zur Stößelbewegung.

Die Eingabe der teilespezifischen Werte für die Stößel-Lageverstellung "ohne Korrektur" erfolgt in der zweiten Vorbereitungsphase 51.

In der dritten und vierten Vorbereitungsphase 52, 53 werden die Anfangswerte der Stößel-Lageverstellung und der Positionskurvenscheiben für den Hauptantrieb eingestellt, wobei die Werte "mit Korrektur" denen "ohne Korrektur" entsprechen. Nach dem Startsignal 37 beginnt mit dem ersten Verfahrensschritt 38 der zyklische Ablauf der Stößelbewegung entweder im Pendel-Modus < 360° oder im 360°- Umlauf-Modus. Analog dem zweiten Ausführungsbeispiel erfolgt im zweiten Verfahrensschritt 40 eine Abfrage der Teilebelegung im Werkzeug. Wenn kein Teil im Werkzeug vorhanden ist, laufen die dritten und vierten Verfahrensschritte 41, 42 für Stößelhub ohne Teil analog dem zweiten Ausführungsbeispiel ab. Im Fall eines vorhandenen Formteils im Werkzeug schließt sich der dritte Verfahrensschritt 54 für Stößelhub mit Teil an, wobei im Bereich des oberen Umkehrpunktes (OU) die Lageregelung auf Positions-Kurvenscheiben "mit Korrektur" aktiviert wird. Entsprechend dem vierten Verfahrenschritt 55 für Stößelhub mit Teil werden von der Stößel-Lageverstellung im Bereich nach dem oberen Umkehrpunkt die Werte "mit Korrektur" angefahren. Beim Ersthub sind die Werte "ohne Korrektur" mit denen "mit Korrektur" identisch. In der nachfolgenden Umformphase wird im fünften Verfahrensschritt 56 die Stößellage einschließlich Stößelkippung mittels der Stößel-Positionsmesseinrichtung 19.1, 19.2 erfasst und im sechsten Verfahrensschritt 57 daraus die Korrekturwerte der Stößel-Lageverstellung berechnet. Im siebenten Verfahrensschritt 58 schließt sich Berechnung der Positions-Kurvenscheiben "mit Korrektur" an. Diese berechneten Werte dienen jeweils im Folgezyklus der Aktivierung der Lageregelung auf Positions-Kurvenscheiben "mit Korrektur" entsprechend dem dritten Verfahrensschritt 54 für Stößelhub mit Teil und dem Anfahren der Werte für die Stößel-Lageregelung "mit Korrektur" entsprechend dem vierten Verfahrensschritt 55 für Stößelhub mit Teil. In der Betriebsart mit 360°-Umlauf werden analog zum zweiten Ausführungsbeispiel entsprechend dem achten Verfahrensschritt 59 vor dem oberen Umkehrpunkt von der Verstelleinrichtung 9.1, 9.2 die Werte für die Stößel-Lageverstellung "ohne Korrektur" angefahren, sodass eine Stößelkippung außerhalb der Lastphase vermieden wird. Der nachfolgende Zyklus wird mit der wiederholten Abfrage der Anwesenheit eines Formteiles gestartet.

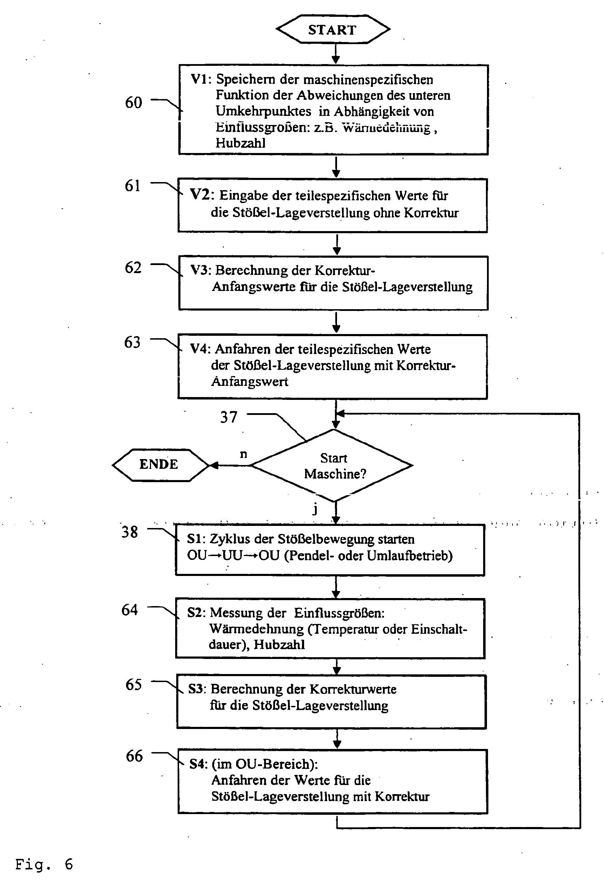

Eine vierte Ausführung beinhaltet die Beeinflussung der Eintauchtiefe des Stößels nach Typ "gesteuert", deren Schrittfolge aus Fig. 6 ersichtlich ist. In der ersten Vorbereitungsphase 60 wird die maschinenspezifische Funktion der Abweichungen des unteren Umkehrpunktes UU in Abhängigkeit von Einflussgrößen, wie beispielsweise Wärmedehnung und Hubzahl gespeichert. Die Eingabe der teilespezifischen Werte für die Stößel-Lageverstellung "ohne Korrektur" erfolgt in der zweiten Vorbereitungsphase 61. In der dritten Vorbereitungsphase 62 erfolgt die Berechnung der Anfangswerte für die Stößel-Lageverstellung mit Korrektur, die in der vierten Vorbereitungsphase 63 angefahren werden. Nach dem Startsignal 37 beginnt mit dem ersten Verfahrensschritt 38 der zyklische Ablauf der Stößelbewegung entweder im Pendel-Modus < 360° oder im 360°- Umlauf-Modus. Während des Betriebes werden die Einflussgrößen auf die Abweichungen des unteren Umkehrpunktes, wie beispielsweise die Hubzahl, Temperatur oder Einschaltdauer gemäß dem zweiten Verfahrensschritt 64 messtechnisch erfasst und daraus im dritten Verfahrensschritt 65 die Korrekturwerte für die Stößel-Lageverstellung berechnet. Vorzugsweise im Bereich des oberen Umkehrpunktes OU werden entsprechend dem vierten Verfahrensschritt 66 die Werte für die Stößel-Lageverstellung angefahren und der Folgezyklus eingeleitet.

### Bezugszeichenliste

- 1.1: erster Seitenständer
- 1.2: zweiter Seitenständer
- 2: Tisch
- 3: Kopfstück
- 4: Stößel
- 5: Oberwerkzeug
- 6: Unterwerkzeug
- 7.1: erstes Pleuel
- 7.2: zweites Pleuel
- 8.1: erstes Exzenterrad
- 8.2: zweites Exzenterrad
- 9.1: erste Verstelleinrichtung
- 9.2: zweite Verstelleinrichtung
- 10.1: erstes Ritzel
- 10.2: zweites Ritzel
- 11.1: erster Servomotor für Hauptantrieb
- 11.2: zweiter Servomotor für Hauptantrieb
- 12.1: Umrichter für den ersten Servomotor
- 12.2: Umrichter für den zweiten Servomotor
- 13.1: dritter Servomotor für die Stößel-Lageverstellung
- 13.2: vierter Servomotor für die Stößel-Lageverstellung
- 14.1: Umrichter für den dritten Servomotor
- 14.2: Umrichter für den vierten Servomotor
- 15: NC-Steuereinrichtung
- 16: Führungsgrößensignale für die Servomotoren zum Hauptantrieb
- 17: Führungsgrößensignale für die Servomotoren zur Stößel-Lageverstellung
- 18: Messgrößensignale der Stößel- Positionsmesseinrichtungen
- 19.1: erste Stößel-Positionsmesseinrichtung
- 19.2: zweite Stößel-Positionsmesseinrichtung
- 20.1: erster Druckpunkt
- 20.2: zweiter Druckpunkt
- 21: Ablaufsteuerung
- 22: Speicher für Maschinen- und Werkzeugdaten
- 23: Funktionseinheit zur Berechnung der Korrekturwerte für die Lageverstellung
- 24: Funktionseinheit zur Positioniersteuerung der Lageverstellung
- 25: Funktionseinheit zur Berechnung der Soll- Bewegungsabläufe mit Korrektur für den Hauptantrieb
- 26: Funktionseinheit zur Positioniersteuerung des Hauptantriebes
- 30: erste Vorbereitungsphase der ersten und zweiten Ausführung
- 31: zweite Vorbereitungsphase der ersten und zweiten Ausführung
- 32: dritte Vorbereitungsphase der ersten und zweiten Ausführung
- 33: vierte Vorbereitungsphase der ersten und zweiten Ausführung
- 34: fünfte Vorbereitungsphase der ersten und zweiten Ausführung
- 35: sechste Vorbereitungsphase der ersten und zweiten Ausführung
- 36: siebente Vorbereitungsphase der ersten Ausführung
- 37: Startsignal
- 38: erster Verfahrensschritt
- 40: zweiter Verfahrensschritt mit Abfrage der Teilebelegung im Werkzeug
- 41: dritter Verfahrensschritt der zweiten und dritten Ausführung für Stößelhub ohne Teil
- 42: vierter Verfahrensschritt der zweiten und dritten Ausführung für Stößelhub ohne Teil
- 43: dritter Verfahrensschritt der zweiten Ausführung für Stößelhub mit Teil
- 44: vierter Verfahrensschritt der zweiten Ausführung für Stößelhub mit Teil
- 45: fünfter Verfahrensschritt der zweiten Ausführung für Stößelhub mit Teil
- 50: erste Vorbereitungsphase der dritten Ausführung
- 51: zweite Vorbereitungsphase der dritten Ausführung
- 52: dritte Vorbereitungsphase der dritten Ausführung
- 53: vierte Vorbereitungsphase der dritten Ausführung
- 54: dritter Verfahrensschritt der dritten Ausführung für Stößelhub mit Teil
- 55: vierter Verfahrensschritt der dritten Ausführung für Stößelhub mit Teil
- 56: fünfter Verfahrensschritt der dritten Ausführung für Stößelhub mit Teil
- 57: sechster Verfahrensschritt der dritten Ausführung für Stößelhub mit Teil
- 58: siebenter Verfahrensschritt der dritten Ausführung für Stößelhub mit Teil
- 59: achter Verfahrensschritt der dritten Ausführung für Stößelhub mit Teil
- 60: erste Vorbereitungsphase der vierten Ausführung
- 61: zweite Vorbereitungsphase der vierten Ausführung
- 62: dritte Vorbereitungsphase der vierten Ausführung
- 63: vierte Vorbereitungsphase der vierten Ausführung
- 64: zweiter Verfahrensschritt der vierten Ausführung
- 65: dritter Verfahrensschritt der vierten Ausführung
- 66: vierter Verfahrensschritt der vierten Ausführung
- 71: Phase oberer Umkehrpunkt (OU) für 360°-Umlaufmodus mit Rückstellung der Stößel-Lageverstellung
- 72: Phase nach oberen Umkehrpunkt (OU) für 360°- Umlaufmodus oder oberer Umkehrpunkt für Pendelmodus
- 73: Phase unterer Umkehrpunkt (UU)
- 74: Phase vor oberen Umkehrpunkt (OU)für 360°-Umlaufmodus oder oberer Umkehrpunkt (OU) für Pendelmodus
- 75: Phase oberer Umkehrpunkt (OU) für 360°-Umlaufmodus ohne Rückstellung der Stößel-Lageverstellung

## Patentansprüche

1. Verfahren zur Steuerung und Regelung der Stößellage an servo-elektrischen Pressen, bei denen die Positionen, Geschwindigkeiten und Kräfte oder Drehmomente der Servomotoren (11) zum Antrieb der Druckpunkte (20) eines Stößel (4) mittels durch eine virtuelle Leitwelle gesteuerter Positions-Kurvenscheibe einer NC-Steuereinrichtung (15) steuerbar sind, **dadurch gekennzeichnet, dass** die den Druckpunkten (20) des Stößels (4) jeweils separat zugeordneten Servomotoren (11) des Haupantriebes für die Stößelbewegung und separat zugeordneten Servomotoren (13) des Nebenantriebes für die Stößel-Lageverstellung zur Einflussnahme auf prozessbedingte Lageabweichungen des Stößels (4) oder Werkzeuges (5, 6) in kombinatorischer Wechselwirkung für eine aktive Eintauchtiefen- und Kippungsregelung steuerbar sind.

2. Verfahren zur Steuerung und Regelung der Stößellage an servo-elektrischen Pressen nach Anspruch 1, **dadurch gekennzeichnet, dass** vor Beginn des Verfahrensablaufes in der ersten Vorbereitungsphase (30) die maschinenspezifischen Steifigkeitswerte in der NC-Steuereinrichtung (15) gespeichert werden, dass in der zweiten Vorbereitungsphase (31) der teilespezifische Soll-Verlauf ohne Korrektur für die Bewegung des Stößels (4) eingegeben, berechnet und als Positions-Kurvenscheibe ohne Korrektur in der NC-Steuereinrichtung (15) gespeichert wird, dass in der dritten Vorbereitungsphase (32) die teilespezifischen Werte für die Lageverstellung des Stößels (4) ohne Korrektur eingegeben und in der NC-Steuereinrichtung (15) gespeichert werden, dass in der vierten Vorbereitungsphase (33) die teilespezifischen Werte für die außermittige Belastung eingegeben oder mittels Lernhub gemessen und in der NC-Steuereinrichtung (15) gespeichert werden, dass in der fünften Vorbereitungsphase (34) die teilespezifischen Werte für die Lageverstellung des Stößels (4) mit Korrektur berechnet und in der NC-Steuereinrichtung (15) gespeichert werden, dass in der sechsten Vorbereitunngsphase (35) der teilespezifische Soll-Verlauf mit Korrektur für die Bewegung des Stößels (4) berechnet und als die den Druckpunkten (20) zugeordneten Positions-Kurvenscheiben mit Korrektur in der NC-Steuereinrichtung (15) gespeichert werden, dass in der siebenten Vorbereitungsphase (36) die teilespezifischen Werte für die Lageverstellung des Stößels (4) mit Korrektur angefahren werden und dass im Verfahrensschritt (38) die Stößelbewegung gestartet sowie eine virtuelle Leitwelle für einen Pressenzyklus generiert wird und die Positionen der den Druckpunkten zugeordneten Servomotoren (11) durch eine Lageregelung beeinflussbar sind, die jeweils ihren Sollwert aus einer entsprechend der virtuellen Leitwelle ausgelesenen Positions-Kurvenscheibe mit Korrektur erhält.

3. Verfahren zur Steuerung und Regelung der Stößellage an servo-elektrischen Pressen nach Anspruch 1, **dadurch gekennzeichnet, dass** vor Beginn des Verfahrensablaufes in der ersten Vorbereitungsphase (30) die maschinenspezifischen Steifigkeitswerte in der NC-Steuereinrichtung (15) gespeichert werden, dass in der zweiten Vorbereitungsphase (31) der teilespezifische Soll-Verlauf ohne Korrektur für die Bewegung des Stößels (4) eingegeben, berechnet und als Positions-Kurvenscheiben ohne Korrektur in der NC-Steuereinrichtung (15) gespeichert wird, dass in der dritten Vorbereitungsphase (32) die teilespezifischen Werte für die Lageverstellung des Stößels (4) ohne Korrektur eingegeben und in der NC-Steuereinrichtung (15) gespeichert werden, dass in der vierten Vorbereitungsphase (33) die teile- und stufenbelegungsspezifischen Werte für die außermittige Belastung eingegeben oder mittels Lernhub gemessen und in der NC-Steuereinrichtung (15) gespeichert werden, dass in der fünften Vorbereitungsphase (34) die teilespezifischen Werte für die Lageverstellung des Stößels (4) mit Korrektur berechnet und in der NC-Steuereinrichtung (15) gespeichert werden, dass in der sechsten Vorbereitungsphase (35) der teilespezifische Soll-Verlauf mit Korrektur für die Bewegung des Stößels (4) berechnet und als die den Druckpunkten (20) zugeordneten Positions-Kurvenscheiben mit Korrektur in der NC-Steuereinrichtung (15) gespeichert werden, dass im ersten Verfahrensschritt (38) die Stößelbewegung gestartet und eine virtuelle Leitwelle für einen Pressenzyklus generiert wird, dass im zweiten Verfahrensschritt (40) eine Abfrage der Teilebelegung im Werkzeug (5, 6) erfolgt, dass entweder für den Betriebsfall ohne Formteil im Werkzeug im dritten Verfahrensschritt (41) während der Stößelbewegung im Bereich des oberen Umkehrpunktes eine Lageregelung aktiviert wird, die jeweils ihren Sollwert aus einer entsprechend der virtuellen Leitwelle ausgelesenen Pbsitions-Kurvenscheibe ohne Korrektur erhält und im vierten Verfahrensschritt (42) während der Stößelbewegung nach dem oberen Umkehrpunkt von der Lageverstellung des Stößels (4) jeweils die Werte ohne Korrektur angefahren werden, oder dass für den Betriebsfall mit Formteil im Werkzeug im dritten Verfahrensschritt (43) während der Stößelbewegung im Bereich des oberen Umkehrpunktes eine Lageregelung aktiviert wird, die ihren Sollwert aus einer entsprechend der virtuellen Leitwelle ausgelesenen Positions-Kurvenscheibe mit Korrektur erhält und im vierten Verfahrensschritt (44) während der Stößelbewegung nach dem oberen Umkehrpunkt von der Lageverstellung des Stößels (4) jeweils die Werte mit Korrektur angefahren werden und dass in beiden Betriebsfällen der Bewegungszyklus mit dem ersten Verfahrensschritt (38) zyklisch fortgesetzt wird.

4. Verfahren zur Steuerung und Regelung der Stößellage an servo-elektrischen Pressen nach Anspruch 1, **dadurch gekennzeichnet, dass** vor Beginn des Verfahrensablaufes in der ersten Vorbereitungsphase (50) der teilespezifische Soll-Verlauf für die Bewegung des Stößels (4) eingegeben, berechnet und als Positions-Kurvenscheiben ohne Korrektur in der NC-Steuereinrichtung (15) gespeichert wird, dass in der zweiten Vorbereitungsphase (32) die teilespezifischen Werte für die Lageverstellung des Stößels (4) ohne Korrektur eingegeben und in der NC-Steuereinrichtung (15) gespeichert werden, dass im ersten Verfahrensschritt (38) die Stößelbewegung gestartet und eine virtuelle Leitwelle für einen Pressenzyklus generiert wird, dass im zweiten Verfahrensschritt (40) eine Abfrage der Teilebelegung im Werkzeug (5, 6) erfolgt, dass entweder für den Betriebsfall ohne Formteil im Werkzeug im dritten Verfahrensschritt (41) während der Stößelbewegung im Bereich des oberen Umkehrpunktes eine Lageregelung aktiviert wird, die jeweils ihren Sollwert aus einer entsprechend der virtuellen Leitwelle ausgelesenen Positions-Kurvenscheibe ohne Korrektur erhält und im vierten Verfahrensschritt (42) während der Stößelbewegung nach dem oberen Umkehrpunkt von der Lageverstellung des Stößels (4) jeweils die Werte ohne Korrektur angefahren werden, oder dass für den Betriebsfall mit Formteil im Werkzeug im dritten Verfahrensschritt (54) während der Stößelbewegung im Bereich des oberen Umkehrpunktes eine Lageregelung aktiviert wird, die ihren Sollwert aus einer entsprechend der virtuellen Leitwelle ausgelesenen Positions-Kurvenscheibe mit Korrektur erhält und im vierten Verfahrensschritt (55) während der Stößelbewegung nach dem oberen Umkehrpunkt von der Lageverstellung des Stößels (4) jeweils die Werte mit Korrektur angefahren werden, dass im fünften Verfahrensschritt (56) beim Durchlauf des Bereiches im unteren Umkehrpunkt die Lage des Stößels (4) oder Oberwerkzeuges (5) bezüglich Kippung und/oder Abweichung des unteren Umkehrpunktes mittels Stößel-Positionsmesseinrichtung (19) erfasst wird, dass im sechsten Verfahrensschritt (57) die Korrekturwerte für die Lageverstellung des Stößels (4) berechnet werden, dass im siebenten Verfahrensschritt (58) die Positions-Kurvenscheiben mit Korrektur berechnet werden und dass in beiden Betriebsfällen der Bewegungszyklus mit dem ersten Verfahrensschritt (38) zyklisch fortgesetzt wird.

5. Verfahren zur Steuerung und Regelung der Stößellage an servo-elektrischen Pressen nach Anspruch 1, **dadurch gekennzeichnet, dass** vor Beginn des Verfahrensablaufes in der ersten Vorbereitungsphase (60) die maschinenspezifischen Funktionen der Abweichungen des unteren Umkehrpunktes in Abhängigkeit von den Einflussgrößen temperaturabhängige Wärmedehnung und Hubzahl in der NC-Steuereinrichtung (15) gespeichert werden, dass in der zweiten Vorbereitungsphase (61) die teilespezifischen werte für die Lageverstellung des Stößels (4) ohne Korrektur eingegeben und in der NC-Steuereinrichtung (15) gespeichert werden, dass in der dritten Vorbereitungsphase (62) der Korrektur-Anfangswert für die Lageverstellung des Stößels (4) berechnet und in der NC-Steuereinrichtung (15) gespeichert wird, dass in der vierten Vorbereitungsphase (63) der Korrektur-Anfangswert für die Lageverstellung des Stößels (4) angefahren wird, dass im ersten Verfahrensschritt (38) die Stößelbewegung gestartet wird, dass im zweiten Verfahrensschritt (64) die Einflussgrößen für die Abweichungen des unteren Umkehrpunktes gemessen werden, dass im dritten Verfahrensschritt (65) der Korrekturwert für die Lageverstellung des Stößels (4) berechnet wird, dass im vierten Verfahrenschritt (66) im Bereich des oberen Umkehrpunktes von der Lageverstellung des Stößels (4) der Wert mit Korrektur angefahren wird und der Bewegungszyklus mit dem ersten Verfahrensschritt (38) zyklisch fortgesetzt wird.

6. Verfahren zur Steuerung und Regelung der Stößellage an servo-elektrischen Pressen nach Anspruch 2 bis 4, **dadurch gekennzeichnet, dass** die den Druckpunkten (20) separat zugeordneten Servomotoren (11) mittels einer gemeinsamen elektronischen Positions-Kurvenscheibe ohne Korrektur und zusätzlichen separaten elektronischen Positions-Kurvenscheiben mit Korrektur für jeden Servomotor (11.1, 11.2) steuerbar sind.

7. Verfahren zur Steuerung und Regelung der Stößellage an servo-elektrischen Pressen nach Anspruch 2 bis 4, **dadurch gekennzeichnet, dass** die den Druckpunkten (20) separat zugeordneten Servomotoren (11) mittels je einer elektronischen Positions-Kurvenscheibe mit Korrektur steuerbar sind.

8. Verfahren zur Steuerung und Regelung der Stößellage an servo-elektrischen Pressen nach Anspruch 3, **dadurch gekennzeichnet, dass** für die Betriebsart mit 360°-Umlaufbewegung im fünften Verfahrensschritt (45) während der Stößelbewegung vor dem Bereich des oberen Umkehrpunktes von der Lageverstellung des Stößels (4) die Werte ohne Korrektur angefahren werden und dass der Bewegungszyklus mit dem ersten Verfahrensschritt (38) zyklisch fortgesetzt wird.

9. Verfahren zur Steuerung und Regelung der Stößellage an servo-elektrischen Pressen nach Anspruch 5, **dadurch gekennzeichnet, dass** für die Betriebsart mit 360°-Umlaufbewegung im achten Verfahrensschritt (59) während der Stößelbewegung vor dem Bereich des oberen Umkehrpunktes von der Lageverstellung des Stößels (4) die Werte ohne Korrektur angefahren werden und dass der Bewegungszyklus mit dem ersten Verfahrensschritt (38) zyklisch fortgesetzt wird.

10. Verfahren zur Steuerung und Regelung der Stößellage an servo-elektrischen Pressen nach Anspruch 3 und 4, **dadurch gekennzeichnet, dass** für den Betriebsfall Voll- und Leerfahren eines aus mehreren Stufen bestehenden Werkzeugsatzes für jede Belegungssituation eine separate Positions-Kurvenscheibe mit Korrektur nutzbar ist.

11. Vorrichtung zur Steuerung und Regelung der Stößellage an servo-elektrischen Pressen mit durch den unteren Umkehrpunkt durchschwingbaren Kurbel- oder Kniehebelmechanismus, bei der die Positionen, Geschwindigkeiten und Drehmomente oder Kräfte der Servomotoren (11) zum Antrieb der Druckpunkte (20) eines Stößel (4) mittels durch eine virtuelle Leitwelle gesteuerter Positions-Kurvenscheibe einer NC-Steuereinrichtung (15) steuerbar sind, **dadurch gekennzeichnet, dass** der zentrale Teil der NC-Steuereinrichtung (15) für die jedem Druckpunkt (20) des Stößels (4) separat zugeordneten Servomotoren (11,13) zum Hauptantrieb und zur Lageverstellung eine Funktionseinheit zur Ablaufsteuerung (21), eine Funktionseinheit zur Speicherung von Maschinen- und Werkzeugdaten (22), eine Funktionseinheit zur Berechnung der Korrekturwerte für die Lageverstellung (23), eine Funktionseinheit zur Positioniersteuerung der Lageverstellung (24), eine Funktionseinheit zur Berechnung der Soll-Bewegungsabläufe mit Korrektur für den Hauptantrieb (25) und eine Funktionseinheit zur Positioniersteuerung des Hauptantriebes (26) enthält.

## Claims

1. Method for open-loop and closed-loop control of the tappet position in servoelectric presses, in which the positions, speeds and forces or torques of the servomotors (11) for driving the pressure points (20) of a tappet (4) can be controlled by means of a position cam disc of an NC control device (15), which position cam disc is controlled by a virtual guide shaft, **characterized in that** the servomotors (11), which are each separately associated with the pressure points (20) of the tappet (4), of the main drive for the tappet movement, and separately associated servomotors (13) of the secondary drive for tappet position adjustment in order to influence the process-dependent position discrepancies of the tappet (4) or tool (5, 6) can be controlled in a combination of interaction for active insertion depth and tilt control.

2. Method for open-loop and closed-loop control of the tappet position in servoelectric presses according to Claim 1, **characterized in that**, in the first preparation phase (30) before the start of the process, the machine-specific stiffness values are stored in the NC control device (15), **in that**, in the second preparation phase (31), the part-specific nominal profile is entered without correction for the movement of the tappet (4), is calculated and is stored as a position cam disc without correction in the NC control device (15), **in that**, in the third preparation phase (32), the part-specific values for the position adjustment of the tappet (4) are entered without correction and are stored in the NC control device (15), **in that**, in the fourth preparation phase (33), the part-specific values for the eccentric load are entered or are measured by means of a learning movement and are stored in the NC control device (15), **in that**, in the fifth preparation phase (34), the part-specific values for the position adjustment of the tappet (4) are calculated with correction and are stored in the NC control device (15), **in that**, in the sixth preparation phase (35) the part-specific nominal profile is calculated with correction for the movement of the tappet (4) and is stored as the position cam discs associated with the pressure points (20) with correction in the NC control device (15), **in that**, in the seventh preparation phase (36), the part-specific values for the position adjustment of the tappet (4) are moved to with correction, and **in that**, in the method step (38) the tappet movement is started and a virtual guide shaft is generated for a press cycle, and the positions of the servomotors (11) associated with the pressure points can be influenced by closed-loop position control, which in each case obtains its nominal value from a position cam disc, read corresponding to the virtual guide shaft, with correction.

3. Method for open-loop and closed-loop control of the tappet position in servoelectric presses according to Claim 1, **characterized in that**, in the first preparation phase (30) before the start of the process, the machine-specific stiffness values are stored in the NC control device (15), **in that**, in the second preparation phase (31), the part-specific nominal profile is entered without correction for the movement of the tappet (4), is calculated and is stored as position cam discs without correction in the NC control device (15), **in that**, in the third preparation phase (32), the part-specific values for the position adjustment of the tappet (4) are entered without correction and are stored in the NC control device (15), **in that**, in the fourth preparation phase (33), the part-specific and step-occupancy-specific values for the eccentric load are entered or are measured by means of a learning movement and are stored in the NC control device (15), **in that**, in the fifth preparation phase (34), the part-specific values for the position adjustment of the tappet (4) are calculated with correction and are stored in the NC control device (15), **in that**, in the sixth preparation phase (35) the part-specific nominal profile is calculated with correction for the movement of the tappet (4) and is stored as the position cam discs associated with the pressure points (20) with correction in the NC control device (15), **in that**, in the first method step (38) the tappet movement is started and a virtual guide shaft is generated for a press cycle, **in that**, in the second method step (40), the part occupancy in the tool (5, 6) is checked, **in that** either closed-loop position control is activated for the operating situation without moulding in the tool in the third method step (41) during the tappet movement in the area of the upper reversal point, which closed-loop position control in each case obtains its nominal value from a position cam disc, read corresponding to the virtual guide shaft, without correction, and, in the fourth method step (42), the values without correction are in each case moved to during the tappet movement after the upper reversal point by the position adjustment of the tappet (4), or **in that**, closed-loop position control is activated for the operating situation with moulding in the tool in the third method step (43) during the tappet movement in the area of the upper reversal point, which closed-loop position control obtains its nominal value from a position cam disc, read corresponding to the virtual guide shaft, with correction, and, in the fourth method step (44), the values with correction are in each case moved to during the tappet movement after the upper reversal point by the position adjustment of the tappet (4), and **in that**, in both operating cases, the movement cycle is continued cyclically with the first method step (38).

4. Method for open-loop and closed-loop control of the tappet position in servoelectric presses according to Claim 1, **characterized in that,** before the start of the process in the first preparation phase (50), the part-specific nominal profile for the movement of the tappet (4) is entered, is calculated and is stored as position cam discs without correction in the NC control device (15), **in that**, in the second preparation phase (32), the part-specific values for the position adjustment of the tappet (4) are entered without correction and are stored in the NC control device (15), **in that**, in the first method step (38), the tappet movement is started and a virtual guide shaft for a press cycle is generated, **in that**, in the second method step (40), the part occupancy in the tool (5, 6) is checked, **in that** either closed-loop position control is activated for the operating situation without moulding in the tool in the third method step (41) during the tappet movement in the area of the upper reversal point, which closed-loop position control in each case obtains its nominal value from a position cam disc, read corresponding to the virtual guide shaft, without correction, and, in the fourth method step (42), the values without correction are in each case moved to during the tappet movement after the upper reversal point by the position adjustment of the tappet (4), or **in that**, closed-loop position control is activated for the operating situation with moulding in the tool in the third method step (54) during the tappet movement in the area of the upper reversal point, which closed-loop position control obtains its nominal value from a position cam disc, read corresponding to the virtual guide shaft, with correction, and, in the fourth method step (55), the values with correction are in each case moved to during the tappet movement after the upper reversal point by the position adjustment of the tappet (4), **in that**, in the fifth method step (56) when passing through the area in the lower reversal point, the position of the tappet (4) or upper tool (5) is recorded with respect to tilting and/or discrepancy at the lower reversal point by means of a tappet position measurement device (19), **in that**, in the sixth method step (57), the correction values for the position adjustment of the tappet (4) are calculated, **in that**, in the seventh method step (58), the position cam discs are calculated with correction, and **in that**, in both operating cases, the movement cycle is continued cyclically with the first method step (38).

5. Method for open-loop and closed-loop control of the tappet position in servoelectric presses according to Claim 1, **characterized in that**, before the start of the process in the first preparation phase (60), the machine-specific functions of the discrepancies at the lower reversal points are stored in the NC control device (15) as a function of the influencing variables temperature-dependent thermal expansion and number of movements, **in that**, in the second preparation phase (61), the part-specific values for the position adjustment of the tappet (4) are entered without correction and are stored in the NC control device (15), **in that**, in the third preparation phase (62), the correction initial value for the position adjustment of the tappet (4) is calculated and is stored in the NC control device (15), **in that**, in the fourth preparation phase (63), the correction initial value for the position adjustment of the tappet (4) is moved to, **in that**, in the first method step (38), the tappet movement is started, **in that**, in the second method step (64), the influencing variables for the discrepancies at the lower reversal point are measured, **in that**, in the third method step (65), the correction value for the position adjustment of the tappet (4) is calculated, **in that**, in the fourth method step (66), the value with correction is moved to in the area of the upper reversal point by the position adjustment of the tappet (4), and the movement cycle is continued cyclically with the first method step (38).

6. Method for open-loop and closed-loop control of the tappet position in servoelectric presses according to Claims 2 to 4, **characterized in that** the servomotors (11) which are separately associated with the pressure points (20) can be controlled by means of a common electronic position cam disc without correction, and additional separate electronic position cam discs with correction, for each servomotor (11.1, 11.2).

7. Method for open-loop and closed-loop control of the tappet position in servoelectric presses according to Claims 2 to 4, **characterized in that** the servomotors (11) which are separately associated with the pressure points (20) can be controlled by means of in each case one electronic position cam disc with correction.

8. Method for open-loop and closed-loop control of the tappet position in servoelectric presses according to Claim 3, **characterized in that**, for the operating mode with 360° revolution movement, the values without correction are moved to in the fifth method step (45), during the tappet movement, before the area of the upper reversal point by the position adjustment of the tappet (4), and **in that** the movement cycle is continued cyclically with the first method step (38).

9. Method for open-loop and closed-loop control of the tappet position in servoelectric presses according to Claim 5, **characterized in that**, for the operating mode with 360° revolution movement, the values without correction are moved to in the eighth method step (59) during the tappet movement before the area of the upper reversal point by the position adjustment of the tappet (4), and **in that** the movement cycle is continued cyclically with the first method step (38).

10. Method for open-loop and closed-loop control of the tappet position in servoelectric presses according to Claim 3 and 4, **characterized in that**, for the operating situation of full-load and no-load of a tool set which comprises a plurality of stages, a separate position cam disc with correction can be used for each occupancy situation.

11. Apparatus for open-loop and closed-loop control of the tappet position in servoelectric presses having a crank or toggle-lever mechanism which can oscillate through the lower reversal point, in which the positions, speeds and torques or forces of the servomotors (11) for driving the pressure points (20) of a tappet (4) can be controlled by means of a position cam disc, which is controlled by a virtual guide shaft of an NC control device (15), **characterized in that** the central part of the NC control device (15) for the servomotors (11, 13) which are separately associated with each pressure point (20) of the tappet (4) contains, for the main drive and for position adjustment, a functional unit for process control (21), a functional unit for storage of machine and tool data (22), a functional unit for calculation of the correction values for the position adjustment (23), a functional unit for open-loop position control of the position adjustment (24), a functional unit for calculation of the nominal movement processes, with correction for the main drive (25), and a functional unit for open-loop position control of the main drive (26).

## Revendications

1. Procédé de commande et de régulation de la position du piston de presses servo-électriques dans lesquelles les positions, vitesses et forces ou couples de rotation des servomoteurs (11) servant à l'entraînement des points de pression (20) d'un piston (4) peuvent être commandés au moyen d'une came de position commandée par un arbre conducteur virtuel d'un dispositif de commande à CN (15), **caractérisé en ce que** les servomoteurs (11) associés respectivement séparément aux points de pression (20) du piston (4) de la commande principale pour le mouvement du piston et les servomoteurs (13) associés séparément de la commande auxiliaire pour le déplacement du piston permettant d'influer sur les écarts de position dus au processus du piston (4) ou de l'outil (5, 6) peuvent être commandés en interaction combinée pour une régulation active de la profondeur de plongée et du renversement.

2. Procédé de commande et de régulation de la position du piston de presses servo-électriques selon la revendication 1, **caractérisé en ce que,** avant le début du déroulement opératoire, dans la première phase préparatoire (30), les valeurs de rigidité spécifiques à la machine sont enregistrées dans le dispositif de commande à CN (15), que, dans la deuxième phase préparatoire (31), l'évolution théorique spécifique à la pièce est saisie sans correction pour le mouvement du piston (4), calculée et enregistrée sans correction sous forme de came de position dans le dispositif de commande à CN (15), que, dans la troisième phase préparatoire (32), les valeurs spécifiques à la pièce pour le déplacement du piston (4) sont saisies sans correction et enregistrées dans le dispositif de commande à CN (15), que, dans la quatrième phase préparatoire (33), les valeurs spécifiques à la pièce pour la charge hors du centre sont saisies ou mesurées par une course d'adaptation et enregistrées dans le dispositif de commande à CN (15), que, dans la cinquième phase préparatoire (34), les valeurs spécifiques à la pièce pour le déplacement du piston (4) sont calculées avec correction et enregistrées dans le dispositif de commande à CN (15), que, dans la sixième phase préparatoire (35), l'évolution théorique spécifique à la pièce est calculée avec correction pour le mouvement du piston (4) et enregistrée sous forme de cames de position associées aux points de pression (20) avec correction dans le dispositif de commande à CN (15), que, dans la septième phase préparatoire (36), on s'approche avec correction des valeurs spécifiques à la pièce pour le déplacement du piston (4) et que, dans l'étape opératoire (38), le mouvement du piston démarre et un arbre conducteur virtuel est généré pour un cycle de compression et les positions des servomoteurs (11) associés aux points de pression peuvent être influencées par un régulateur de position qui reçoit respectivement leur valeur théorique avec correction d'une came de position lue suivant l'arbre conducteur virtuel.

3. Procédé de commande et de régulation de la position du piston de presses servo-électriques selon la revendication 1, **caractérisé en ce que,** avant le début du déroulement opératoire, dans la première phase préparatoire (30), les valeurs de rigidité spécifiques à la machine sont enregistrées dans le dispositif de commande à CN (15), que, dans la deuxième phase préparatoire (31), l'évolution théorique spécifique à la pièce est saisie sans correction pour le mouvement du piston (4), calculée et enregistrée sans correction sous forme de cames de position dans le dispositif de commande à CN (15), que, dans la troisième phase préparatoire (32), les valeurs spécifiques à la pièce pour le déplacement du piston (4) sont saisies sans correction et enregistrées dans le dispositif de commande à CN (15), que, dans la quatrième phase préparatoire (33), les valeurs spécifiques à la pièce et à l'occupation du niveau pour la charge hors du centre sont saisies ou mesurées par une course d'adaptation et enregistrées dans le dispositif de commande à CN (15), que, dans la cinquième phase préparatoire (34), les valeurs spécifiques à la pièce pour le déplacement du piston (4) sont calculées avec correction et enregistrées dans le dispositif de commande à CN (15), que, dans la sixième phase préparatoire (35), l'évolution théorique spécifique à la pièce est calculée avec correction pour le mouvement du piston (4) et enregistrée sous forme de cames de position associées aux points de pression (20) avec correction dans le dispositif de commande à CN (15), que, dans la première étape opératoire (38), le mouvement du piston démarre et un arbre conducteur virtuel est généré pour un cycle de compression, que, dans la deuxième étape opératoire (40), il y a une consultation de l'occupation par une pièce de l'outil (5, 6), que, soit pour le cas de fonctionnement sans pièce moulée dans l'outil, dans la troisième étape opératoire (41), pendant le mouvement du piston au niveau du point d'inversion supérieur, un régulateur de position est activé et reçoit respectivement sa valeur théorique d'une came de position lue suivant l'arbre conducteur virtuel sans correction et dans la quatrième étape opératoire (42), pendant le mouvement du piston après le point d'inversion supérieur du déplacement du piston (4), on va respectivement vers les valeurs sans correction ou que, pour le cas de fonctionnement avec une pièce moulée dans l'outil, dans la troisième étape opératoire (43), pendant le mouvement du piston au niveau du point d'inversion supérieur, un régulateur de position est activé et reçoit sa valeur théorique d'une came de position lue suivant l'arbre conducteur virtuel avec correction et dans la quatrième étape opératoire (44), pendant le mouvement du piston après le point d'inversion supérieur du déplacement du piston (4), on va respectivement vers les valeurs avec correction et que, dans les deux cas de fonctionnement, le cycle de mouvement se poursuit cycliquement par la première étape opératoire (38).

4. Procédé de commande et de régulation de la position du piston de presses servo-électriques selon la revendication 1, **caractérisé en ce que,** avant le début du déroulement opératoire, dans la première phase préparatoire (50), l'évolution théorique spécifique à la pièce pour le mouvement du piston (4) est saisie, calculée et enregistrée sans correction sous forme de cames de position dans le dispositif de commande à CN (15), que, dans la deuxième phase préparatoire (32), les valeurs spécifiques à la pièce pour le déplacement du piston (4) sont saisies sans correction et enregistrées dans le dispositif de commande à CN (15), que, dans la première étape opératoire (38), le mouvement du piston démarre et un arbre conducteur virtuel est généré pour un cycle de compression, que, dans la deuxième étape opératoire (40), il y a une consultation de l'occupation par une pièce de l'outil (5, 6), que, soit pour le cas de fonctionnement sans pièce moulée dans l'outil, dans la troisième étape opératoire (41), pendant le mouvement du piston au niveau du point d'inversion supérieur, un régulateur de position est activé et reçoit respectivement sa valeur théorique d'une came de position lue suivant l'arbre conducteur virtuel sans correction et dans la quatrième étape opératoire (42), pendant le mouvement du piston après le point d'inversion supérieur du déplacement du piston (4), on va respectivement vers les valeurs sans correction ou que, pour le cas de fonctionnement avec une pièce moulée dans l'outil, dans la troisième étape opératoire (54), pendant le mouvement du piston au niveau du point d'inversion supérieur, un régulateur de position est activé et reçoit sa valeur théorique d'une came de position lue suivant l'arbre conducteur virtuel avec correction et dans la quatrième étape opératoire (55), pendant le mouvement du piston après le point d'inversion supérieur du déplacement du piston (4), on va respectivement vers les valeurs avec correction, que dans la cinquième étape opératoire (56), en traversant la zone du point d'inversion inférieur, la position du piston (4) ou de l'outil supérieur (5) par rapport au renversement et/ou à l'écart du point d'inversion inférieur est détectée au moyen d'un dispositif de mesure de position de piston (19), que, dans la sixième étape opératoire (57), les valeurs correctives pour le déplacement du piston (4) sont calculées, que, dans la septième étape opératoire (58), les cames de position sont calculées avec correction et que, dans les deux cas de fonctionnement, le cycle de mouvement se poursuit cycliquement par la première étape opératoire (38).

5. Procédé de commande et de régulation de la position du piston de presses servo-électriques selon la revendication 1, **caractérisé en ce que,** avant le début du déroulement opératoire, dans la première phase préparatoire (60), les fonctions spécifiques à la machine des écarts du point d'inversion inférieur sont enregistrées en fonction des paramètres d'influence extension thermique liée à la température et nombre de cycles dans le dispositif de commande à CN (15), que, dans la deuxième phase préparatoire (61), les valeurs spécifiques à la pièce pour le déplacement du piston (4) sont saisies sans correction et enregistrées dans le dispositif de commande à CN (15), que, dans la troisième phase préparatoire (62), la valeur initiale de correction pour le déplacement du piston (4) est calculée et enregistrée dans le dispositif de commande à CN (15), que, dans la quatrième phase préparatoire (63), on va vers la valeur initiale de correction pour le déplacement du piston (4), que, dans la première étape opératoire (38), le mouvement du piston démarre, que, dans la deuxième étape opératoire (64), les paramètres d'influence pour les écarts du point d'inversion inférieur sont mesurés, que, dans la troisième étape opératoire (65), la valeur de correction pour le déplacement du piston (4) est calculée, que, dans la quatrième étape opératoire (66), au niveau du point d'inversion supérieur du déplacement du piston (4), on va vers la valeur avec correction et le cycle de mouvement se poursuit cycliquement par la première étape opératoire (38).

6. Procédé de commande et de régulation de la position du piston de presses servo-électriques selon les revendications 2 à 4, **caractérisé en ce que** les servomoteurs (11) associés séparément aux points de pression (20) peuvent être commandés au moyen d'une came de position électronique commune sans correction et de cames de position électroniques supplémentaires séparées avec correction pour chaque servomoteur (11.1, 11.2).

7. Procédé de commande et de régulation de la position du piston de presses servo-électriques selon les revendications 2 à 4, **caractérisé en ce que** les servomoteurs (11) associés séparément aux points de pression (20) peuvent être commandés chacun au moyen d'une came de position électronique avec correction.

8. Procédé de commande et de régulation de la position du piston de presses servo-électriques selon la revendication 3, **caractérisé en ce que**, pour le mode de fonctionnement avec mouvement périphérique sur 360°, dans la cinquième étape opératoire (45), pendant le mouvement du piston avant la zone du point d'inversion supérieur du déplacement du piston (4), on va vers les valeurs sans correction et que le cycle de mouvement se poursuit cycliquement par la première étape opératoire (38).

9. Procédé de commande et de régulation de la position du piston de presses servo-électriques selon la revendication 5, **caractérisé en ce que**, pour le mode de fonctionnement avec mouvement périphérique sur 360°, dans la huitième étape opératoire (59), pendant le mouvement du piston avant la zone du point d'inversion supérieur du déplacement du piston (4), on va vers les valeurs sans correction et que le cycle de mouvement se poursuit cycliquement par la première étape opératoire (38).

10. Procédé de commande et de régulation de la position du piston de presses servo-électriques selon les revendications 3 et 4, **caractérisé en ce que**, pour le cas de fonctionnement avec déplacement à plein et à vide d'un jeu d'outils composé de plusieurs niveaux, on peut utiliser pour chaque situation d'occupation une came de position séparée avec correction.

11. Dispositif de commande et de régulation de la position du piston de presses servo-électriques doté d'un mécanisme de manivelle ou de levier à rotule alternable par le biais du point d'inversion inférieur, dans lequel les positions, vitesses et couples de rotation ou forces des servomoteurs (11) servant à l'entraînement des points de pression (20) d'un piston (4) peuvent être commandés au moyen d'une came de position commandée par un arbre conducteur virtuel d'un dispositif de commande à CN (15), **caractérisé en ce que** la partie centrale du dispositif de commande à CN (15) pour les servomoteurs (11, 13) associés séparément à chaque point de compression (20) du piston (4) pour la commande principale et le déplacement comporte une unité fonctionnelle pour la commande du déroulement (21), une unité fonctionnelle pour l'enregistrement de données de machine et d'outillage (22), une unité fonctionnelle pour le calcul des valeurs correctives pour le déplacement (23), une unité fonctionnelle pour la commande de positionnement du déplacement (24), une unité fonctionnelle pour le calcul des déroulements théoriques du mouvement avec correction pour la commande principale (25) et une unité fonctionnelle pour la commande de positionnement de la commande principale (26).
